# EUROPEAN PATENT SPECIFICATION

(11) **EP 0 401 464 B1**
(45) Date of publication and mention of the grant of the patent: **01.12.1993**
(21) Application number: 90102118.8
(22) Date of filing: 02.02.1990
(51) Int. Cl.: G01P 3/44, G01P 1/02

(54) **Bearing apparatus for a driven shaft of an automobile**
Lageranordnung für eine angetriebene Welle eines Kraftfahrzeuges
Dispositif palier pour un arbre en rotation dans un véhicule

(30) Priority: 02.06.1989 JP 141777/89
(43) Date of publication of application: 12.12.1990
(60) Divisional application: 91105056.5
(73) Proprietor: KOYO SEIKO CO., LTD., Osaka-shi Osaka-fu (JP)
(72) Inventor: Seo, Nobuyuki, c/o Koyo Seiko Co., Ltd., Osaka-shi, Osaka-fu (JP); Nohara, Makoto, c/o Koyo Seiko Co., Ltd., Osaka-shi, Osaka-fu (JP)
(74) Representative: Glawe, Delfs, Moll & Partner

(56) References cited:
- DE-A- 3 620 884
- DE-U- 8 800 370
- JP-A-63 166 601

## Description

### BACKGROUND OF THE INVENTION

The present invention relates to a bearing apparatus of a type used for bearing a driven shaft of an automobile and having a rotational speed detector which detects the rotational speed of the wheels connecting with the shaft so that the wheels do not lock, when brakes are suddenly applied, by controlling the brakes according to the detected rotational speed.

A conventional bearing apparatus of the above type is shown in Fig. 5 (according to Japanese Laid-open Patent Application No. 63-166601). This bearing apparatus has a cylindrically shaped outside member 50 fixed to a chassis of an automobile (not shown), a cylindrically shaped inside member 51 which includes a driven shaft and which is coaxially positioned inside of the outside member 50, rolling elements 52 in double rows which roll between a raceway surface 50a of the outside member 50 and a raceway surface 51f of the inside member 51, and retainers 53 which hold the rolling elements 52. The inside member 51 has a flange 51b at its one end 51a to which a wheel (not shown) is mounted, and a detected member 51e on the other end 51c; said detected member 51e has multiple projections 51d at an even interval in a circumferential direction. A closed-end, cylindrically shaped cover 54 is provided at the end 50b of the outside member 50 in such a manner as to enclose the detected member 51e. A rotational speed detector 55 is fixed in said cover 54 and held in such a manner as to be opposed to said detected member 51e at a specified distance.

Mounting of the rotational speed detector 55 in the cover 54 is accomplished by first mounting the cover 54 to the end 50b of the outside member 50, and then press fitting the rotational speed detector 55 into a hole 54a of the cover 54. According to this mounting method for the rotational speed detector 55, it is impossible to place a jig having a strike surface inside of the cover 54 and to press fit the rotational speed detector until the rotational speed detector 55 hits the strike surface when the rotational speed detector 55 is mounted. Therefore, the rotational speed detector 55 cannot be readily and precisely positioned relative to the detected member 51e. It might be possible to control the insertion of the rotational speed detector 55 by controlling the dimension (dimension d in Fig. 5) of a portion of the rotational speed detector projecting outwardly in the axial direction from the cover 54. However, there can be variations in said dimension in the axial direction. Therefore, precise positioning of the rotational speed detector 55 relative to the detected member 51e cannot be performed even with this method.

Because sufficiently high precision cannot thus be obtained in positioning the rotational speed detector 55 relative to the detected member 51e, the conventional bearing apparatus presents the problem of low precision in the rotational speed detection.

Furthermore, because the rotational speed detector 55 is fixed in the cover 54 by press fitting, the seal performance of the cover is low at the fitting portion, and water and other foreign matter can penetrate inside the cover. An additional problem concerns the gradual loosening of the cover at the fitting portion due to vibrations.

### SUMMARY OF THE INVENTION

Therefore, the object of the present invention is to solve the above-mentioned problems and to provide a bearing apparatus for a driven shaft provided with a rotational speed detector which enables precise positioning of the rotational speed detector to a detected member, and also can achieve high seal performance and high vibration resistance, thereby enabling a high precision rotational speed detection for a long period of time.

In order to achieve the above object, a bearing apparatus of the present invention is characterized in that the cover, the rotational speed detector and the connector are fixedly connected to each other by a resin block formed through the use of a plastics molding technique so that the cover, the rotational speed detector and the connector are unitary. More specifically, the bearing apparatus of the present invention comprises a cylindrically shaped outside member which is fixed to a chassis of the automobile; a cylindrically shaped inside member which includes a driven shaft and which is rotatably supported by the outside member through rolling elements which are held by a retainer and roll between a raceway surface of the outside member and a raceway surface of the inside member, one end of the inside member having a flange for mounting a wheel thereon and the other end of the inside member having a circular detected member which has multiple projections provided at an even interval in the circumferential direction of the detected member; a rotational speed detector which is positioned in opposition to the detected member for detecting a rotational speed of the detected member equivalent to that of the wheel and generates a rotational speed signal which is sent to an antilock brake system or similar device in the automobile through a connector; and a cover fit to the outside member for covering at least parts of the detected member and the rotational speed detector which are in opposition, the rotational speed detector being fixed to the cover, characterized in that the cover, the rotational speed detector and the connector are fixedly connected to each other by a resin block formed through the use of a plastics molding technique so that the cover, the rotational speed detector and the connector are unitary.

According to this characteristic feature of the present invention, the cover, the rotational speed detector and the connector provide an assembly of one-piece construction and therefore, they can be treated as a single unit.

The cover, rotational speed detector, and connector which are unitary are installed and positioned with a single action by simply mounting the cover to the outside member. Thus, unlike the conventional bearing apparatus, it is not necessary to go through multiple steps to install them.

Because the rotational speed detector is fixedly connected with the cover by a resin block so that predetermined relative positions of each member may be held at the specified precision according to the present invention, the rotational speed detector is positioned to the detected member with significantly greater precision than is possible with the conventional apparatus. Thus, the rotational speed detector accurately detects the passage of the projections on the circumference of the detected member, and is thus able to accurately detect the rotational speed of the inside member, and therefore, of the wheel. The rotational speed detector outputs a rotational speed signal which corresponds accurately to the rotational speed of the inside member. The rotational speed signal from the rotational speed detector is sent to an antilock brake system or similar device through the connector which is integrated with the cover and the rotational speed detector.

Because the cover, the rotational speed detector and the connector are connected to each other by a resin block formed through the use of a plastic molding technique, fitting portions thereof are tightly covered by the resin block. And the molded resin has an appropriate thickness so that it integrates those members. Therefore, the monolithically molded cover, rotational speed detector, and connector offer high sealing performance, and entry of water or other foreign matter to those parts of the detected member and the rotational speed detector which are in opposition is well prevented. Furthermore, these members are integrated with high rigidity so that the position of the rotational speed detector to the cover will not shift, the rotational speed detector will not separate from the cover because of vibration action, and the sealing performance will thus not deteriorate. Thus, high precision detection of the rotational speed can be maintained over an extended period of time.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a cross sectional view taken in the axial direction of an essential part of a preferred embodiment of the present invention, showing a cover, a rotational speed detector, and a connector which are embedded in a resin block;

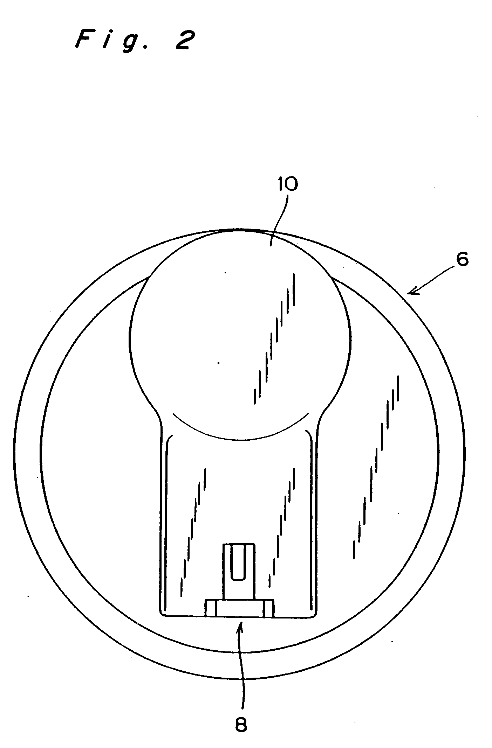

Fig. 2 and Fig. 3 are perspective views seen in the directions of II and III, respectively, of the cover, the rotational speed detector, and the connector of Fig. 1 which are embedded in a resin block;
Fig. 4 is a diagram showing a modification of the detected member; and
Fig. 5 is a cross sectional view taken in the axial direction of a conventional axle bearing apparatus provided with a rotational speed detector;

### DETAILED DESCRIPTION OF THE PREFERRED EMBODIMENTS

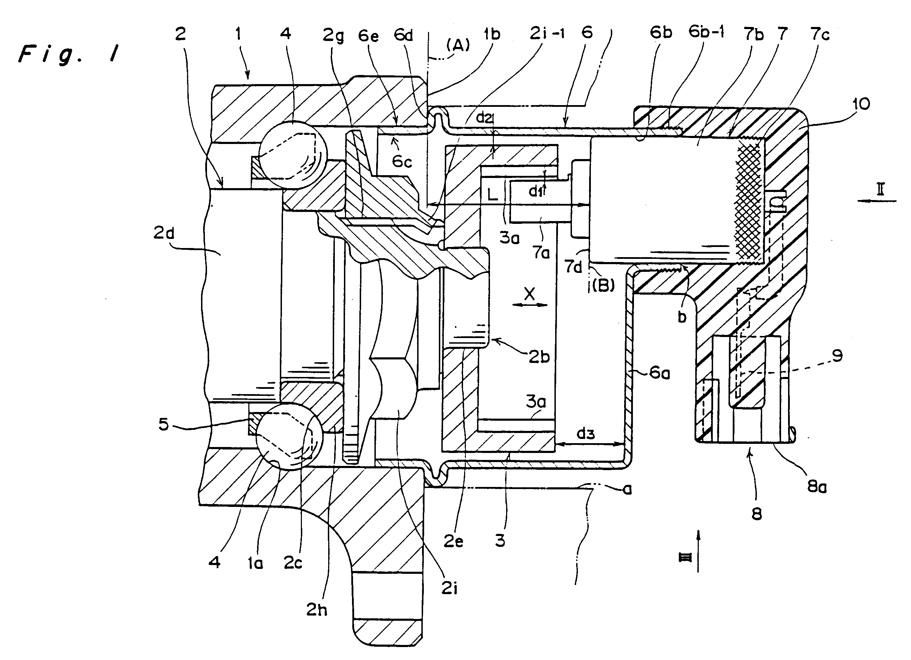

Referring now to Fig. 1, reference number 1 is a cylindrically shaped outside member mounted to a suspension member 'a' of a chassis of an automobile not shown), and 2 is a cylindrically shaped inside member which includes a driven shaft 2d extending inside of the outside member 1 in the axial direction indicated by X; on one end (corresponding to 51a in Fig. 5) of the inside member 2 which would be at the left side of Fig. 1 but which is not shown in this figure is a flange similar to the one of Fig. 5 to which is to be mounted a wheel, and to the other end 2b of the inside member 2 is attached an annular detected member 3. This detected member 3 with a U-shaped cross section has multiple projections 3a (only two of them are shown) provided around the inside circumference at an even interval. Mounting of the detected member 3 to the end 2b is accomplished by means of press fitting of the detected member 3 on a round post-shaped fitting portion 2e.

Reference numbers 4 are the rolling elements which roll between a raceway surface 1a of the outside member 1 and a raceway surface 2c of the inside member 2 (as shown in Fig. 5, double rows of the rolling elements are provided, although the raceway surface 1a of the outside member 1, the raceway surface 2c of the inside member 2, and the rolling elements 4 which would be positioned at the left side as seen in Fig. 5 are not shown in Fig. 1). The inside member 2 is rotatably held by the outside member 1 through the double rows of the rolling elements 4.

5 is a retainer which holds the rolling elements 4 at an even interval in the circumferential direction of the inside member 2 (Naturally, there would be provided another retainer 5 for holding the other row of the rolling elements on the left side).

An annular raceway member 2h having the raceway surface 2c on its outer periphery is fixed to the driven shaft 2d by means of a nut 2i which is screwed onto a threaded portion 2g of the driven shaft 2d. The nut 2i is locked to the driven shaft 2d by bending a tab 2i-1 projecting from the nut 2i into a notch provided at a specified position of the threaded member 2g. In this way the nut 2i is prevented from loosening from the driven shaft 2d.

Reference number 6 is a cover mounted to the outside member 1 and having a semi-closed, cylindrical shape. At a specified position in its bottom 6a perpendicular to the axial direction as shown by X in the figure is provided a fitting hole 6b, and at an open end 6c is provided a fitting 6e having a seat 6d projecting outwardly in the radial direction. The seat 6d rests against an end surface 1b of the outside member 1 when the cover 6 is mounted to the outside member 1.

Reference number 7 is a rotational speed detector which is fit to the fitting hole 6b of the cover 6. The rotational speed detector 7 has a main body 7b and a detector portion 7a which are aligned in the axial direction X. The rotational speed detector 7 is positioned accurately relative to the cover 6 such that the detector portion 7a is held at a specified dimension d1 in the radial direction to the projection 3a at the top of the detected member 3 when the cover 6 is mounted.

The cover 6 and the rotational speed detector 7 are connected to each other by a resin block 10 formed therearound through the use of plastics molding technique. In other words, both are embedded in the resin block 10.

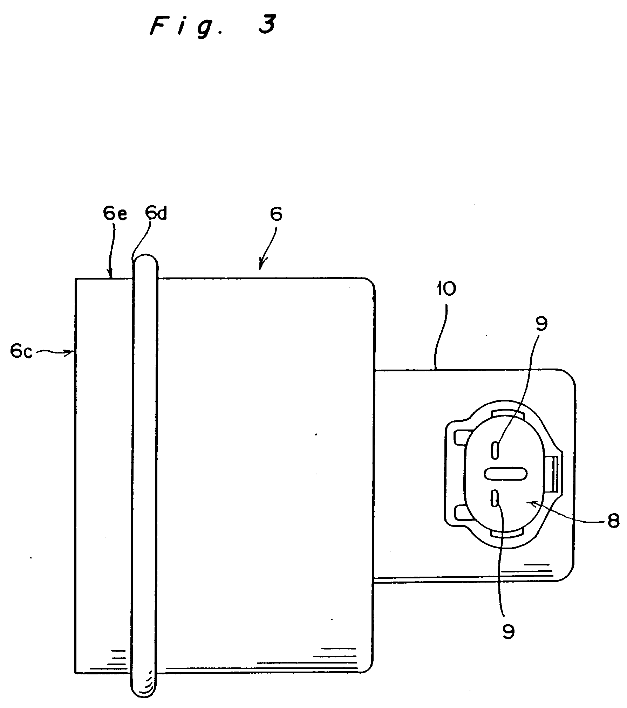

Reference number 8 is an integrally molded connector in the resin block 10 at a specified position relative to the cover 6 and the rotational speed detector 7. Thus, the cover 6, rotational speed detector 7 and connector provide an assembly of one-piece construction with the help of the resin block 10. The connector 8 consists of a connector housing and a pair of terminals 9 (see Fig. 3). The connector housing is formed by using a molding die of a corresponding shape. Therefore, it is not necessary to use a separate connector housing. A hole or opening 8a formed in the connector housing extends in the direction perpendicular to the axial direction X. The pair of terminals 9 is provided at a portion defining a base of the connector housing for extracting a detected rotational speed signal from the rotational speed detector 7. Said detected rotational speed signal is sent through the connector 8 to an antilock brake system, which is not shown in the figure.

The fitting (see 'b' in Fig. 1) of the hole 6b of the cover 6 to the rotational speed detector 7 is completely sealed by means of being completely covered with the resin block 10 to a specified thickness. The fitting of the fitting portion 6e of the cover 6 to the outside member 1 is also made tight. Therefore, once the integrally molded cover, rotational speed detector and connector are mounted to the outside member as shown in Fig. 1, the penetration of water and other foreign matter to the inside of the cover 6, such as may occur in a conventional bearing apparatus wherein a rotational speed detector is press fit to a cover, is effectively prevented.

Furthermore, the peripheral surface of the main body 7b of the rotational speed detector 7 at an end 7c is knurled, and an outside surface 6b-1 of the fitting hole 6b of the cover 6 is likewise knurled. These knurled surfaces help assure a more positive anchor and sufficient rigidity in the resin 10 when the cover 6, rotational speed detector 7, and connector 8 are molded together. Therefore, even if vibrations or other outside factors work on the cover 6, the position of the rotational speed detector 7 to the cover 6 will not shift in the axial direction, and the rotational speed detector 7 will not become biased with respect to the axis X. To be short, high vibration resistance is assured.

In the dies used for molding the resin block 10, a reference face (A) used to position the seat 6d of the cover 6 and a reference face (B) used to position an end 7d of the main body 7b of the rotational speed detector 7 are provided at a specified distance L from each other. By setting the seat 6d of the cover 6 to the reference face A and at the same time by setting the end 7d of the rotational speed detector 7 fit in the fitting hole 6b of the cover 6 to reference face B, the cover 6, the rotational speed detector 7, and the terminals 9 of the connector 8 are molded into an integrated member with the rotational speed detector 7 positioned with high precision to the cover 6. As described above, the connector housing 10a is formed during this molding process. When the integrated member 6, 7, 8 is mounted in place only by mounting the cover 6 to the outside member 1, the detected member 3 is precisely positioned with gaps d2 and d3 in the radial and axial directions, respectively, to the cover 6.

In addition to this precise positioning, the mounting of the integrated member is very simple, for it is not necessary to go through multiple steps in the assembly process of the bearing apparatus to mount the rotational speed detector to the outside member as is required with conventional axle bearing apparatuses in which a cover is first mounted to an outside member, and a rotational speed detector separate from the cover is then press fit into the cover.

Due to the various features above described, the bearing apparatus of this embodiment can assure a high precision in detecting the rotational speed of wheels, and can maintain this high detection precision for an extended period of time.

It is to be noted that many variations and modifications of the above embodiment are possible. Some of them are as follows.

The connector is not limited to the above one in which the opening is in a direction perpendicular to the axial direction; the connector may also open in the axial direction or at any specific angle to the axial direction. Furthermore, the connector may be a preformed connector which may be integrated with the cover and the rotational speed detector through the molding process.

The position and thickness of the resin which is used to mold or connect the cover, the rotational speed detector, and the connector together shall also not be limited to the position and thickness as described above, but may be selected as desired to assure high sealing performance and vibration resistance.

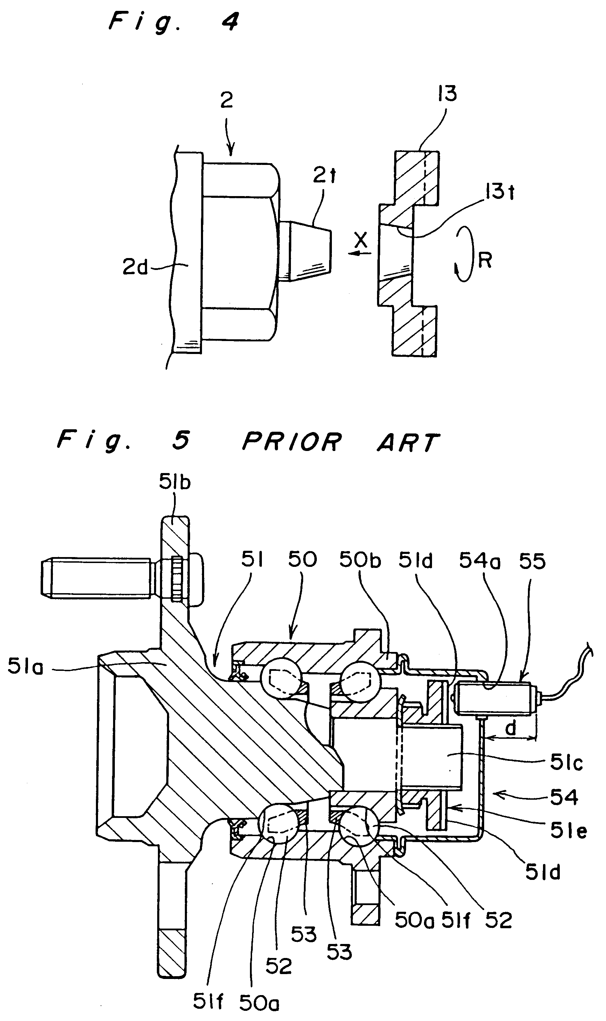

The detected member may also be one in which multiple projections directed outwardly in the radial direction are provided around the outer circumference of the detected member at uniform intervals. In this case, the rotational speed detector shall be integrated to the cover so as to be positioned outside of the detected member in the radial direction and in opposition to the detected member in the radial direction. Furthermore, the detected member may also be any in which there are multiple projections projecting in the axial direction at an even interval on the circumference (see Fig. 4). In this case, the rotational speed detector shall be integrated with the cover so as to be in opposition to the detected member in the axial direction. Moreover, the detected member may also be one in which there are multiple projections at a specific angle to the axial direction. In this case, the rotational speed detector shall, of course, be integrated with the cover at the specific angle to the axial direction. In any case, the cover shall cover at least those parts of the detected member and rotational speed detector which are in opposition.

Furthermore, mounting of the detected member to the axle shaft shall not be limited to the press fitting. As shown in Fig. 4, a tapered member 2t may be provided on a driven shaft 2d of an inside member 2, and a tapered hole 13t may be formed at the center of a detected member 13 with a taper angle corresponding to the angle of a tapered member 2t; while the axle shaft 2d is turned in the direction of an arrow R, the detected member 13 is pressed in the direction of an arrow X to be fixed onto the tapered member 2t by the friction welding.

In addition, with respect of the locking of the nut 2i to the driven shaft 2d, this can also be achieved by fixing a ring member (not shown) onto the driven shaft adjacent to the nut in the axial direction by means of the friction welding method. In this case, the detected member having plural projections may be positioned next to or around the ring member.

The invention being thus described, it will be obvious that the same may be varied in many ways. Such modifications as would be obvious to one skilled in the art are intended to be included within the scope of the following claims.

## Claims

1. A bearing apparatus for a driven shaft of an automobile comprising a cylindrical outside member (1) adapted to be fixed to a chassis of the automobile; a cylindrical inside member (2) which includes a driven shaft (2d) and which is rotatably supported by the outside member (1) through rolling elements (4) which are held by a retainer (5) and roll between a raceway surface (1a) of the outside member (1) and a raceway surface (2c) of the inside member, one end of the inside member (2) having a flange for mounting a wheel thereon and the other end of the inside member (2) having a circular detected member (3) which has multiple projections (3a) provided at even intervals in the circumferential direction of the detected member; a rotational speed detector (7) which is positioned in opposition to the detected member (3) for detecting the rotational speed of the detected member (3) equivalent to that of the wheel and generates a rotational speed signal which is sent to an antilock brake system or similar device in the automobile through a connector (8); and a cover (6) fitted to the outside member for covering at least those parts of the detected member and the rotational speed detector which are in opposition, the rotational speed detector (7) being fitted to a fitting hole (6b) of the cover (6), characterized in that the cover (6), the rotational speed detector (7) and the connector (8) are fixedly connected and precisely aligned with respect to each other by a resin block (10) formed through the use of a plastics molding technique so that the resin block (10), the cover (6), the rotational speed detector (7) and the connector (8) form a unitary one-piece construction which can be mounted to the outside member (1) in a single mounting step,
and in that the resin block (10) completely and sealingly covers the fitting of the hole (6) to the rotational speed detector.

2. A bearing appartus as claimed in claim 1, characterized in that the connector (8) consists of a connector housing (10a) and electrical terminals (9) connected to the rotational speed detector (7), and the connector housing (10a) is an integral part of the resin block (10).

3. A bearing apparatus as claimed in claim 1, characterized in that peripheral surfaces (6b-1, 7c) of the cover (6) and the rotational speed detector (7) in contact with the resin block (10) are partially knurled.

4. A bearing apparatus as claimed in any of claims 1 to 3, characterized in that the detected member (3), which is of a cylindrical shape, has a hollow cylindrical portion (3b) which extends in an axial direction, and the hollow cylindrical portion (3b) has said plurality of projections (3a) spaced evenly apart in the circumferential direction of the hollow cylindrical portion on an inner peripheral surface of the hollow cylindrical portion; and
the rotational speed detector (7) is fixed to a bottom of the cover member (6) so that the means (7a) for detecting rotational speed is positioned within the hollow cylindrical portion (3b) and opposes the projections (3a) of the cylindrical detected member (3).

## Patentansprüche

1. Lagervorrichtung für eine angetriebene Welle eines Automobils mit einem zylindrischen Außenteil (1) zur Befestigung am Fahrgestell des Automobils; einem zylindrischen Innenteil (2), der eine angetriebene Welle (2d) umfaßt und am Außenteil (1) drehbar gelagert ist durch Wälzelemente (4), die durch einen Käfig (5) gehalten sind und zwischen einer Laufbahnfläche (1a) des Außenteils (1) und einer Laufbahnfläche (2c) des Innenteils abrollen, wobei ein Ende des Innenteils (2) einen Flansch zur Befestigung eines Rades und das andere Ende des Innenteils (2) ein kreisförmiges Abtastelement (3) aufweist, welches eine Vielzahl von Vorsprüngen (3a) in gleichmäßigen Abständen in Umfangsrichtung des Abtastelementes aufweist; einem Drehzahldetektor (7), der gegenüber dem Abtastelement (3) angeordnet ist zum Detektieren der der Raddrehzahl entsprechenden Drehzahl des Abtastelementes (3) und ein Drehzahlsignal erzeugt, welches über einen Verbinder (8) einem Antiblockier-Bremssystem oder einer ähnlichen Einrichtung in dem Automobil zugeführt wird; und einem an dem Außenteil befestigten Deckel (6) zum Abdecken mindestens derjenigen Teile des Abtastelementes und des Drehzahldetektors, die einander gegenüberstehen, wobei der Drehzahldetektor (7) in ein Montageloch (6b) des Deckels (6) eingepaßt ist,
dadurch **gekennzeichnet,** daß der Deckel (6), der Drehzahldetektor (7) und der Verbinder (8) fest miteinander verbunden und exakt zueinander ausgerichtet sind durch einen mittels Kunststofformtechnik geformten Kunststoffblock (10) derart, daß der Kunststoffblock (10), der Deckel (6), der Drehzahldetektor (7) und der Verbinder (8) eine einstückige Konstruktion bilden, die in einem einzigen Montageschritt an dem Außenteil (1) montiert werden kann, und daß der Kunststoffblock (10) die Passung des Lochs (6) an den Drehzahldetektor vollständig und dichtend überdeckt.

2. Lagervorrichtung nach Anspruch 1,
dadurch **gekennzeichnet,** daß der Verbinder (8) aus einem Verbindergehäuse (10a) und elektrischen Anschlüssen (9) besteht, die mit dem Drehzahldetektor (7) verbunden sind, und daß das Verbindergehäuse (10a) ein einstückiger Teil des Kunststoffblocks (10) ist.

3. Lagervorrichtung nach Anspruch 1,
dadurch **gekennzeichnet,** daß Umfangsflächen (6b-1, 7c) des Deckels (10) und des Drehzahldetektors (7), die in Kontakt mit dem Kunststoffblock (10) sind, teilweise gerieft sind.

4. Lagervorrichtung nach einem der Ansprüche 1 bis 3,
dadurch **gekennzeichnet,** daß das Abtastelement (3), welches zylindrische Form hat, einen sich in Axialrichtung erstreckenden hohlzylindrischen Abschnitt (b) aufweist und der hohlzylindrische Abschnitt (b) die Vielzahl von Vorsprüngen (3a) in gleichmäßigen Abständen in Umfangsrichtung des hohlzylindrischen Abschnitts an einer inneren Umfangsfläche des hohlzylindrischen Abschnitts aufweist, und daß der Drehzahldetektor (7) am Boden des Deckels (6) befestigt ist, so daß das Mittel (7a) zum Detektieren der Drehzahl in dem hohlzylindrischen Abschnitt (3b) angeordnet ist und den Vorsprüngen (3a) des zylindrischen Abtastelements (3) gegenübersteht.

## Revendications

1. Palier pour un arbre entraîné d'une automobile comportant un élément extérieur cylindrique (1) prévu pour être fixé sur un châssis de l'automobile; un élément intérieur cylindrique (2) qui comprend un arbre entraîné (2d) et qui est supporté de façon rotative par l'élément extérieur (1) par l'intermédiaire d'éléments de roulement (4) qui sont maintenus par un élément de retenue (5) et roulent entre une surface de roulement (1a) de l'élément extérieur (1) et une surface de roulement (2c) de l'élément intérieur (2), une extrémité de l'élément intérieur (2) ayant une bride pour le montage d'une roue et l'autre extrémité de l'élément intérieur (2) ayant un élément détecté circulaire (3) qui possède de multiples saillies (3a) prévues à intervalles réguliers dans la direction circonférentielle de l'élément détecté, un détecteur de vitesse de rotation (7) qui est positionné en opposition à l'élément détecté (3) afin de détecter la vitesse de rotation de l'élément détecté circulaire (3) équivalente à celle de la roue et qui génère un signal de vitesse de rotation qui est envoyé à un système de freinage anti-blocage ou un dispositif similaire dans l'automobile par l'intermédiaire d'un connecteur (8); et un cache (6) monté sur l'élément extérieur afin de recouvrir au moins les parties de l'élément détecté et du détecteur de vitesse de rotation qui sont face-à-face, le détecteur de vitesse de rotation (7) étant monté dans un trou de montage (6b) du cache (6), caractérisé en ce que le cache (6), le détecteur de vitesse de rotation (7) et le connecteur (8) sont reliés de façon fixe et alignés avec précision l'un par rapport à l'autre grâce à un bloc de résine (10) réalisé en utilisant une technique de moulage de matière plastique de telle sorte que le bloc de résine (10), le cache (6), le détecteur de vitesse de rotation (7) et le connecteur (8) forment une construction d'une seule pièce unitaire qui peut être montée sur l'élément extérieur (1) en une unique étape de montage,
et en ce que le bloc de résine (10) recouvre totalement et de façon étanche le montage du cache (6) sur le détecteur de vitesse de rotation.

2. Palier selon la revendication 1, caractérisé en ce que le connecteur (8) se compose d'un boîtier de connecteur (10a) et de bornes électriques (9) reliés au détecteur de vitesse de rotation (7), et le boîtier de connecteur (10a) fait partie intégrante du bloc de résine (10).

3. Palier selon la revendication 1, caractérisé en ce que des surfaces périphériques (6b-1, 7c) du cache (6) et du détecteur de vitesse de rotation (7) en contact avec le bloc de résine (10) sont partiellement moletées.

4. Palier selon l'une quelconque des revendications 1 à 3, caractérisé en ce que l'élément détecté (3), qui est de forme cylindrique, possède une partie cylindrique creuse (3b) qui s'étend dans une direction axiale, et la partie cylindrique creuse (3b) possède lesdites multiples saillies (3a) espacées de manière égale dans la direction circonférentielle de la partie cylindrique creuse sur une surface périphérique interne de la partie cylindrique creuse; et le détecteur de vitesse de rotation (7) est fixé sur une partie inférieure du cache (6) de telle sorte que les moyens (7a) destinés à détecter la vitesse de rotation sont positionnés dans la partie cylindrique creuse (3b) et font face aux saillies (3a) de l'élément détecté cylindrique (3).
